# EUROPÄISCHE PATENTANMELDUNG

(11) **EP 2 591 881 A1**
(43) Veröffentlichungstag der Anmeldung: **15.05.2013**
(21) Anmeldenummer: 11188375.7
(22) Anmeldetag: 09.11.2011
(51) Int. Cl.: B25B 27/30, F23R 3/00

(54) **Vorrichtung, Verfahren und Gussschraube zum sicheren Austauschen von Hitzeschildplatten von Gasturbinen**

(71) Anmelder: Siemens Aktiengesellschaft, 80333 München (DE)
(72) Erfinder: Buse, Christoph, 45149 Essen (DE); Lenze, Martin, 45359 Essen (DE); Link, Marco, 47057 Duisburg (DE); Müller, Dirk, 45470 Mülheim a.d.Ruhr (DE); Tenrahm, Thomas-Dieter, 46535 Dinslaken (DE); Grendel, Sabine, 46147 Oberhausen (DE); Hartmann, Manfred, 45475 Mülheim an der Ruhr (DE); Henschel, Elke, 45481 Mülheim an der Ruhr (DE); Hofmann, Markus, 44581 Castrop-Rauxel (DE); Jaspers, Meike, 46117 Oberhausen (DE); Kadji, Arsène Brice, 12167 Berlin (DE); Klemke, Thomas, 13625 Berlin (DE); Kluge, Andre, 48249 Dülmen (DE)

(57) **Zusammenfassung**

Die Erfindung betrifft eine Vorrichtung zum Fixieren eines Tellerfederpaketes einer Gasturbine, ein Verfahren zum Austauschen einer Hitzeschildplatte einer Gasturbine und eine Gussschraube zum Befestigen einer Hitzeschildplatte einer Gasturbine.

Die Vorrichtung kann insbesondere bei der Wartung von Gasturbinen vorteilhaft verwendet werden und besitzt einen stabförmigen Schaft mit einem Kopfbereich und einem Fußbereich und einer in dem Fußbereich des Schaftes angeordneten Betätigungsvorrichtung. Der Kopfbereich des Schaftes weist in einer ersten Betriebsposition einen ersten maximalen Durchmesser quer zu einer Längsachse des Schaftes und in einer zweiten Betriebsposition einen zweiten maximalen Durchmesser quer zu der Längsachse des Schaftes auf. Der zweite maximale Durchmesser ist dabei größer als der erste maximale Durchmesser. Die Betätigungsvorrichtung ist ausgebildet, durch einen Benutzer ausgelöst zu werden und bei Auslösung durch den Benutzer den Kopfbereich von der ersten Betriebsposition in die zweite Betriebsposition zu überführen.

## Beschreibung

Gasturbinen mit Ringbrennkammern werden wegen der im Betrieb in den Ringbrennkammern herrschenden hohen Temperaturen üblicherweise mit metallischen Hitzeschildplatten verkleidet. Bestimmte Hitzeschildplatten werden dabei mit Gussschrauben befestigt. Die Hitzeschildplatte wird dabei nicht unmittelbar durch die Gussschraube mit einer Wandung oder sonstigen Trägerstruktur verschraubt, da die thermische Dehnung der metallischen Hitzeschildplatte zu mechanischen Verspannungen führen würde, die die Integrität der Hitzeschildplatte gefährdet. Stattdessen wird auf der Rückseite der Hitzeschildplatte ein Tellerfederpaket vorgesehen, das eine Tellerfeder und eine mit der Tellerfeder verbundene Druckplatte besitzt. Die Gussschraube wird in die Druckplatte durch die Hitzeschildplatte hindurch eingeschraubt. Das Tellerfederpaket stellt durch die Tellerfeder einen zum Befestigen der Hitzeschildplatte ausreichenden Anpressdruck sicher und gleicht die thermische Dehnung aus. Die Druckplatte wird durch einen Sicherungsring im Tellerfederpaket gegen ein Herausfallen gesichert. Dieser Sicherungsring wird nur benötigt, wenn die Gussschraube nicht in die Druckplatte eingeschraubt ist, also nur während Konstruktion und Wartung der Gasturbine.

Der beschriebene Aufbau hat sich ohne Fehlerfall über lange Zeit bewährt. Die Erfindung geht jedoch von der Annahme aus, dass ein Sicherungsring aufgrund von mechanischen und thermischen Belastungen im Betrieb brechen könnte. Dies könnte bei Lösen der Gussschraube - beispielsweise im Wartungsfall - dazu führen, dass Druckplatte und Tellerfeder in das Innere der Gasturbine fallen, von wo sie nur mit großem Aufwand und während eines unerwünscht langen Stillstandes der Gasturbine zu bergen wären.

Es ist daher Aufgabe der Erfindung, eine Möglichkeit zum sicheren Austauschen von Hitzeschildplatten von Gasturbinen zu bieten.

Ein erster Erfindungsaspekt führt daher eine Vorrichtung zum Fixieren eines Tellerfederpaketes einer Gasturbine ein, die insbesondere bei der Wartung von Gasturbinen vorteilhaft verwendet werden kann. Die Vorrichtung besitzt einen stabförmigen Schaft mit einem Kopfbereich und einem Fußbereich und einer in dem Fußbereich des Schaftes angeordneten Betätigungsvorrichtung. Der Kopfbereich des Schaftes weist in einer ersten Betriebsposition einen ersten maximalen Durchmesser quer zu einer Längsachse des Schaftes und in einer zweiten Betriebsposition einen zweiten maximalen Durchmesser quer zu der Längsachse des Schaftes auf. Der zweite maximale Durchmesser ist dabei größer als der erste maximale Durchmesser. Die Betätigungsvorrichtung ist ausgebildet, durch einen Benutzer ausgelöst zu werden und bei Auslösung durch den Benutzer den Kopfbereich von der ersten Betriebsposition in die zweite Betriebsposition zu überführen.

Die Vorrichtung kann als Werkzeug verwendet werden, um das Tellerfederpaket einer Hitzeschildplatte einer Gasturbine zu fixieren. Dazu kann die Vorrichtung in der ersten Betriebsposition mit dem Kopfbereich voran durch eine Bohrung in der eingeschraubten Gussschraube gesteckt werden, wobei die Bohrung einen größeren Durchmesser als den ersten maximalen Durchmesser der Vorrichtung und einen kleineren Durchmesser als den zweiten maximalen Durchmesser der Vorrichtung aufweisen sollte. Befindet sich der Kopfbereich hinter dem Tellerfederpaket, kann die Betätigungsvorrichtung ausgelöst werden, woraufhin die Vorrichtung in die zweite Betriebsposition überführt wird. Durch Heraus- beziehungsweise Anziehen der Vorrichtung kann nun aufgrund des größeren zweiten maximalen Durchmessers des Kopfbereichs der Vorrichtung rückseitig ein Anpressdruck auf das Tellerfederpaket ausgeübt werden, ohne dass die Rückseite des Aufbaus zugänglich gemacht werden müsste. Die Gussschraube kann ausgeschraubt und über den Schaft der Vorrichtung abgezogen werden. Gegebenenfalls können die Hitzeschildplatte und/oder die Gussschraube anschließend ersetzt werden, wonach die Vorrichtung wieder entfernt werden kann.

Vorzugsweise kann hierfür der Kopfbereich des Schaftes in einer dritten Betriebsposition einen dritten maximalen Durchmesser quer zu der Längsachse des Schaftes aufweisen, der kleiner als der zweite maximale Durchmesser ist. Die Betätigungsvorrichtung ist in diesem Fall dazu ausgebildet, den Kopfbereich von der zweiten Betriebsposition in die dritte Betriebsposition zu überführen. Diese Ausführungsform der erfindungsgemäßen Vorrichtung erleichtert das Herausziehen der Vorrichtung durch eine Bohrung mit einem kleineren Durchmesser als der zweite maximale Durchmesser des Kopfbereichs der Vorrichtung.

Besonders bevorzugt verfügt die Vorrichtung über wenigstens einen in dem Kopfbereich des Schaftes angeordneten Schwenkarm. Die Betätigungsvorrichtung ist dabei mit dem wenigstens einen Schwenkarm verbunden oder verbindbar und dazu ausgebildet, den wenigstens einen Schwenkarm zu schwenken, so dass in der ersten Betriebsposition das Vektorprodukt eines entlang der Längsachse des Schwenkarms ausgerichteten ersten Einheitsvektors mit einem entlang einer Längsachse des Schaftes ausgerichteten zweiten Einheitsvektor einen ersten Betrag und in der zweiten Betriebsposition das Vektorprodukt des ersten Einheitsvektors mit dem zweiten Einheitsvektor einen zweiten Betrag, welcher größer als der erste Betrag ist, besitzt.

Diese Ausführungsform der Erfindung besitzt einen besonders einfachen Aufbau, der es ermöglicht, gegebenenfalls am Ort der zu inspizierenden oder wartenden Gasturbine eine erfindungsgemäße Vorrichtung bei Bedarf erst herzustellen.

Bei dieser Ausführungsform der Erfindung kann auch die dritte Betriebsposition vorgesehen sein. Dabei ist ein dritter Betrag des Vektorproduktes des ersten Einheitsvektors mit dem zweiten Einheitsvektor in der dritten Betriebsposition kleiner als der zweite Betrag. Vorzugsweise ist dabei der wenigstens eine Schwenkarm in der dritten Betriebsposition näherungsweise antiparallel zu der ersten Betriebsposition ausgerichtet. Das heißt, dass der wenigstens eine Schwenkarm zwischen der ersten Betriebsposition und der dritten Betriebsposition einen stumpfen Winkel bildet.

Alle Ausführungsformen mit wenigstens einem Schwenkarm umfassen bevorzugterweise zwei in dem Kopfbereich des Schaftes angeordnete Schwenkarme, welche in der zweiten Betriebsposition auf einander gegenüberliegenden Seiten des Schaftes von dem Schaft abstehen. Die Verwendung von zwei einander gegenüberliegenden Schwenkarmen bietet eine ausreichende Sicherung der Vorrichtung gegen versehentliches Herausrutschen aus der Bohrung bei gleichzeitig geringem Aufwand. Es können allerdings auch mehr als zwei Schwenkarme vorgesehen sein.

Bei einer besonders vorteilhaften Ausführung der Erfindung umfasst der Schaft ein Außenrohr. Die Betätigungsvorrichtung ist dabei als eine in dem Außenrohr angeordnete und entlang der Längsachse des Außenrohres verschiebbare Stange ausgebildet.

Bei einer Weiterbildung dieser Ausführungsform sind zwei Schwenkarme vorgesehen, die um jeweils ein an dem Außenrohr oder an der verschiebbaren Stange angeordnetes Scharnier schwenkbar sind.

Ein zweiter Erfindungsaspekt führt ein Verfahren zum Austauschen einer Hitzeschildplatte einer Gasturbine ein. Zu Beginn des Verfahrens wird eine Bohrung in einer Gussschraube, welche durch die Hitzeschildplatte in ein Tellerfederpaket eingeschraubt ist, zugänglich gemacht. Anschließend wird die erfindungsgemäße Vorrichtung durch die Bohrung eingesteckt, wobei die Vorrichtung sich in der ersten Betriebsposition befindet. Nach dem Einstecken wird der Kopfbereich des Schaftes der Vorrichtung durch Auslösen der Betätigungsvorrichtung von der ersten Betriebsposition in die zweite Betriebsposition überführt, woraufhin das Tellerfederpaket fixiert werden kann. Dies kann beispielsweise durch Ausüben eines Anpressdrucks geschehen. Da das Tellerfederpaket nun fixiert ist und auch bei entnommener Gussschraube nicht in das Innere der Gasturbine fallen kann, kann die Gussschraube gefahrlos entnommen werden. Wird die Hitzeschildplatte nicht mehr durch die Gussschraube gehalten, kann sie ausgetauscht werden, was dadurch geschehen kann, dass sie über den Schaft der Vorrichtung abgezogen und eine neue Hitzeschildplatte über den Schaft der Vorrichtung aufgezogen wird. Anschließend kann die Gussschraube oder eine Austauschgussschraube durch die ausgetauschte Hitzeschildplatte in das Tellerfederpaket eingeschraubt werden. Zum Abschluss des Verfahrens wird die Vorrichtung herausgezogen und die Bohrung in der Gussschraube oder der Austauschgussschraube verschlossen.

Bei einer Variante des erfindungsgemäßen Verfahrens kann die Vorrichtung vor dem Herausziehen der Vorrichtung in die dritte Betriebsposition überführt werden.

Ein dritter Aspekt der Erfindung, der auch getrennt von den anderen Erfindungsaspekten als eigenständige Erfindung verfolgt werden kann, führt eine Gussschraube zum Befestigen einer Hitzeschildplatte einer Gasturbine ein. Die Gussschraube weist eine Sicherungsbuchse und einen Gussschraubenkopf auf. Die Sicherungsbuchse besitzt auf einer Außenoberfläche ein erstes Außengewinde und auf einer entlang einer Längsachse der Außenoberfläche durch die Sicherungsbuchse hindurch verlaufenden Bohrung ein Innengewinde. Der Gussschraubenkopf weist ein in das Innengewinde einschraubbares zweites Außengewinde auf und ist ausgebildet, die Bohrung durch die Sicherungsbuchse zu verschließen.

Die Gussschraube besitzt den Vorteil, bereits eine Bohrung aufzuweisen, die durch Abschrauben des Gussschraubenkopfes einfach zugänglich gemacht werden kann. Eine solche Gussschraube kann im Rahmen des erfindungsgemäßen Verfahrens vorteilhaft eingesetzt werden. Dort, wo eine herkömmliche Gussschraube vorgefunden wird, kann eine Bohrung in die Gussschraube gebohrt werden. In diesem Fall sollte die durchbohrte Gussschraube durch eine erfindungsgemäße zweiteilige Gussschraube ausgetauscht werden.

Die Erfindung umfasst daher auch das Verwenden einer solchen Gussschraube zum Befestigen einer Hitzeschildplatte einer Gasturbine.

Die Erfindung wird nachfolgend anhand von Abbildungen von Ausführungsbeispielen näher beschrieben. Gleiche Bezugszeichen bezeichnen dabei gleiche oder gleichartige Gegenstände, auf deren wiederholte Beschreibung gegebenenfalls verzichtet wird. Es zeigen:
- Fig. 1: eine herkömmliche Gussschraube;
- Fig. 2: ein erstes Ausführungsbeispiel einer erfindungsgemäßen Gussschraube;
- Fig. 3: ein zweites Ausführungsbeispiel einer erfindungsgemäßen Gussschraube;
- Fig. 4: ein drittes Ausführungsbeispiel einer erfindungsgemäßen Gussschraube;
- Fig. 5: eine erfindungsgemäße Vorrichtung in einer ersten Betriebsposition;
- Fig. 6: eine erfindungsgemäße Vorrichtung in einer zweiten Betriebsposition; und
- Fig. 7: eine erfindungsgemäße Vorrichtung in einer dritten Betriebsposition.

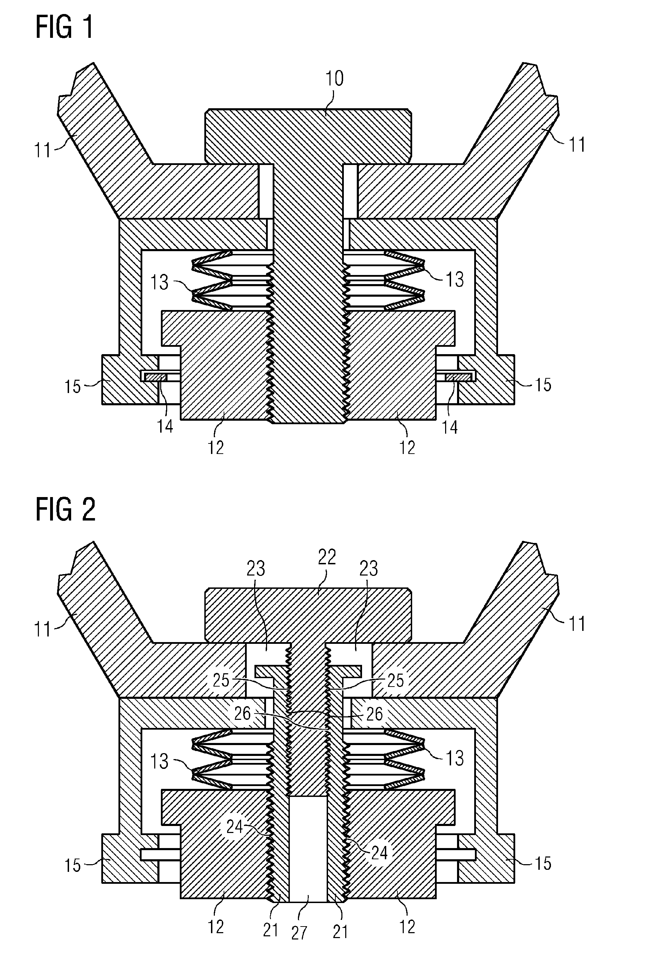

Fig. 1 zeigt eine herkömmliche Gussschraube 10 in einer Schnittdarstellung. Die Gussschraube 10 ist in eine Druckplatte 12 eingeschraubt und hält so eine Hitzeschildplatte 11 einer Gasturbine. Aufgrund der im Betrieb wegen der großen Hitze auftretenden Verspannungen wird die Hitzeschildplatte 11 nicht fest verschraubt, da andernfalls die Gefahr einer Beschädigung bestünde. Stattdessen wird ein hinreichender Anpressdruck durch eine Tellerfeder 13 sichergestellt, die sich jedoch, einer Ausdehnung oder Verformung der Gussschraube 10 oder der Hitzeschildplatte 11 folgend, zusammenziehen oder ausdehnen kann. Die Druckplatte 12 wird herkömmlich durch einen Sicherungsring 14, der in eine rückwärtige Haltestruktur 15 eingelassen ist gegen Herausfallen bei Entfernen der Gussschraube 10 gesichert. Ein solches Herausfallen der Druckplatte 12 hätte eine unerwünscht lange Betriebspause der Gasturbine zur Folge, da die Ringbrennkammer der Gasturbine aufwendig abgebaut werden müsste, um die herausgefallene Druckplatte 12 zu bergen. Die Erfindung schließt die Erkenntnis mit ein, dass ein solches Herausfallen der Druckplatte 12 unbedingt vermieden werden muss.

Fig. 2 zeigt ein erstes Ausführungsbeispiel einer erfindungsgemäßen Gussschraube. Erfindungsgemäß kann der Sicherungsring 14 von Fig. 1 entfallen, aber auch als zusätzliche Sicherungsmaßnahme zur Erfindung vorgesehen werden. Die Gussschraube der Erfindung umfasst eine Sicherungsbuchse 21, welche in die Druckplatte 12 eingeschraubt wird und diese in einem ersten Schritt gegen Herausfallen aus der Haltestruktur 15 sichert. Die Sicherungsbuchse 21 besitzt hierzu auf ihrer Außenseite ein Außengewinde 24. Außerdem weist die Sicherungsbuchse 21 entlang ihrer Längs- bzw. Rotationsachse (vertikal im Bild) eine Bohrung 27 auf, die einen Durchlass durch die Sicherungsbuchse 21 bietet. Auf einer Innenseite dieser Bohrung 27 ist ein Innengewinde 25 vorgesehen, in welches in einem nachfolgenden Schritt ein Gussschraubenkopf 22 eingeschraubt wird. Der Gussschraubenkopf 22 fixiert die Hitzeschildplatte 11 und leitet den von der Tellerfeder 13 ausgeübten Anpressdruck auf diese über. Ein Zwischenraum 23 bietet einen vertikalen Abstand zwischen dem dem Gussschraubenkopf 22 zugewandten Ende der Sicherungsbuchse 21 und einer Auflagefläche des Gussschraubenkopfes 22 sowie zwischen dem erwähnten Ende der Sicherungsbuchse 21 und einer Auflagefläche der Haltestruktur 15, welcher das angesichts der thermischen Ausdehnung im Betrieb vorteilhafte Spiel der Komponenten sicherstellt. Der Zwischenraum 23 erstreckt sich aus denselben Gründen vorteilhafterweise auch in im Bild horizontaler Richtung zwischen der Hitzeschildplatte 11 einerseits und der Sicherungsbuchse 21 und dem Gussschraubenkopf 22 andererseits.

Die Bohrung 27 in der Sicherungsbuchse 21 der Gussschraube der Fig. 2 kann durch Entfernen des Gussschraubenkopfes einfach zugänglich gemacht werden, wodurch die Druckplatte für einen Austausch der Gussschraube oder der Hitzeschildplatte 11 rückseitig für die als erster Erfindungsaspekt beschriebene Vorrichtung zugänglich wird. Die Vorrichtung kann in ihrer ersten Betriebsposition durch die Bohrung 27 eingeführt werden und die Druckplatte 11 nach Überführen in die zweite Betriebsposition von hinten gegen ein Herausfallen sichern. Die Sicherungsbuchse 21 und/oder die Hitzeschildplatte 11 können über die Vorrichtung abgezogen, untersucht und gegebenenfalls ausgetauscht werden.

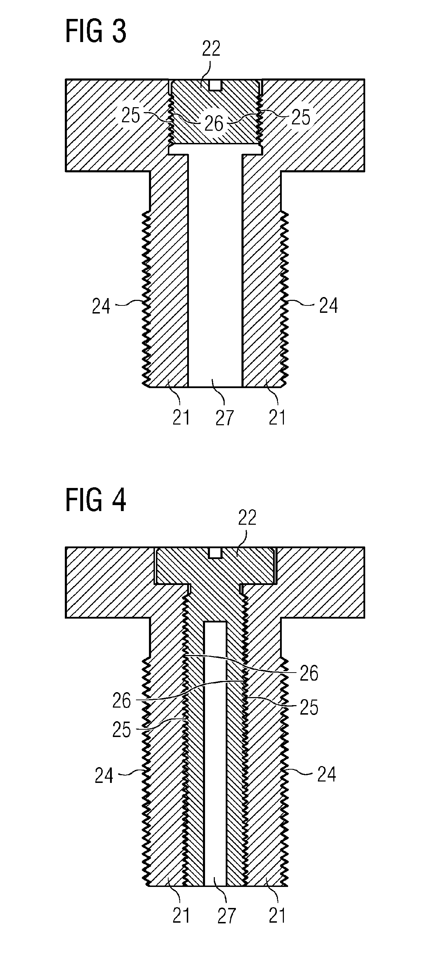

Fig. 3 zeigt ein zweites Ausführungsbeispiel einer erfindungsgemäßen Gussschraube. Bei der zweiten Ausführungsform der Gussschraube ist der Gussschraubenkopf 22 gegenüber dem Beispiel der Fig. 2 verkleinert ausgeführt und kann vollständig oder wenigstens zu überwiegendem Teil in die Sicherungsbuchse 21 eingeschraubt werden. Die Sicherungsbuchse 21 weist im Unterschied zu dem Beispiel von Fig. 2 einen Kopf auf, der es ermöglicht, bei installierter Gussschraube die Sicherungsbuchse 21 durch Halten an dem Kopf während des Herausschraubens des Gussschraubenkopfes 22 gegen ein versehentliches Herausschrauben wegen eines schwergängigen Gewindes 25 oder 26 zu sichern, bevor die erfindungsgemäße Vorrichtung zum Sichern der Druckplatte 12 durch die Bohrung 27 eingeführt werden kann.

Fig. 4 zeigt ein drittes Ausführungsbeispiel einer erfindungsgemäßen Gussschraube. Bei diesem Ausführungsbeispiel kann der Gussschraubenkopf 22 ebenfalls vollständig in die Sicherungsbuchse 21 eingeschraubt werden, besitzt aber einen Kopf, der einen größeren Durchmesser als den der Bohrung 27 aufweist. Als weiteren Unterschied, der jedoch auch separat von dem vorgenannten verwirklicht werden kann, besitzt der Gussschraubenkopf 22 der Fig. 4 einen Schaft, der näherungsweise die gleiche Länge wie die Bohrung 27 besitzen kann. In diesen Schaft kann jedoch eine Kühlungsbohrung eingebracht sein (siehe Fig. 4), die den Gussschraubenkopf 22 jedoch nicht vollständig durchmisst, da andernfalls der Gussschraubenkopf 22 die Bohrung 27 nicht abdichten könnte.

Insbesondere bei den Ausführungsbeispielen der erfindungsgemäßen Gussschrauben von den Figuren 3 und 4 können die Gussschraubenköpfe außerdem eine Nut zum Ansetzen eines Schraubwerkzeuges aufweisen. Beispiele hierfür sind Innensechskant, Kreuzschlitze und dergleichen. Eine solche Nut ist vorteilhaft, weil andernfalls der Gussschraubenkopf aufgrund des geringen oder gar fehlenden Überstandes über die Sicherungsbuche 21 nur schwierig entfernt werden kann. Es ist aber auch vorstellbar, den äußeren Rand des Gussschraubenkopfes 22 kantig auszuführen und den Gussschraubenkopf 22 so zu dimensionieren, dass er über die Sicherungsbuchse 21 herausragt, damit er mit einem Schraubenschlüssel oder einer Zange gegriffen werden kann.

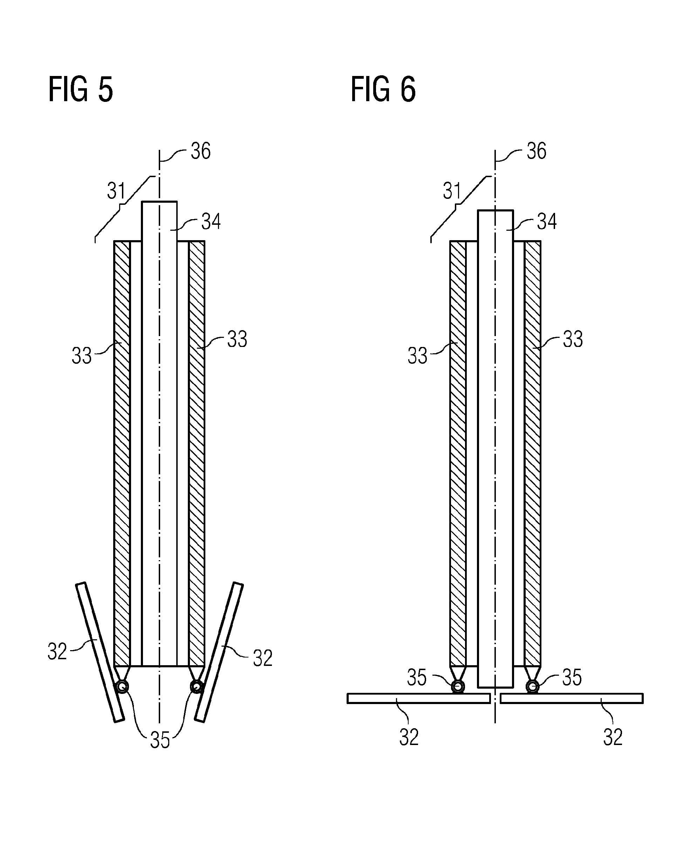

Fig. 5 zeigt eine erfindungsgemäße Vorrichtung in einer ersten Betriebsposition. Das Ausführungsbeispiel der Vorrichtung besitzt einen stabförmigen Schaft, der sich entlang einer Längsachse 36 erstreckt und im Wesentlichen aus einem Außenrohr 33 gebildet wird, das vorzugsweise zylindrisch ausgeführt ist. Im Inneren des Außenrohres 33 ist eine verschiebbare Stange 34 vorgesehen, die gemeinsam mit dem Außenrohr 33 die Funktion einer Betätigungsvorrichtung 31 übernimmt. Die Funktionsweise der Betätigungsvorrichtung 31 im gezeigten Ausführungsbeispiel der erfindungsgemäßen Vorrichtung wird nachfolgend aus der Zusammenschau der Beschreibung der Figs. 5, 6 und 7 deutlich werden.

Im in der Fig. 5 unten dargestellten Kopfbereich der Vorrichtung sind Scharniere 35 angeordnet, welche im gezeigten Beispiel mit dem Außenrohr 33 verbunden sind. Es sind jedoch auch alternative Anordnungen vorstellbar, bei denen die Scharniere 35 mit der Stange 34 verbunden sind. An den Scharnieren 35 sind jeweils Schwenkarme 32 befestigt, welche um die Scharniere 35 schwenken können. Die Stange 34 kann den Winkelbereich, um den die Schwenkarme 32 schwenken können, einschränken, wobei die Einschränkung davon abhängt, wie weit die Stange 34 innerhalb des Außenrohres 33 verschoben wird. In der in Fig. 5 gezeigten ersten Betriebsposition besitzt die Vorrichtung einen verhältnismäßig geringen Querdurchmesser und lässt sich durch die Bohrung 27 der erfindungsgemäßen Gussschraube einführen.

Fig. 6 zeigt eine erfindungsgemäße Vorrichtung in einer zweiten Betriebsposition, in der die Schwenkarme 32 nach außen geschwenkt sind und so den Querdurchmesser der Vorrichtung vergrößern, wodurch die Vorrichtung nicht aus der Bohrung 27 der erfindungsgemäßen Gussschraube herausgezogen werden kann. In der zweiten Betriebsposition kann die Druckplatte 12 durch Zurückziehen der Vorrichtung aus der Bohrung 27 gegen die Tellerfeder 13 gedrückt und so gegen ein Herausfallen gesichert werden.

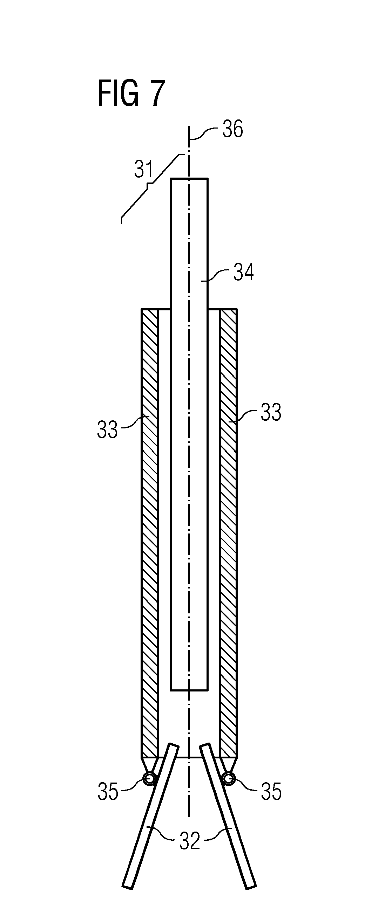

Fig. 7 zeigt eine erfindungsgemäße Vorrichtung in einer dritten Betriebsposition. In der dritten Betriebsposition ist die Stange 34 ein Stück weit aus dem Außenrohr 33 herausgezogen, so dass die Schwenkarme 32 weiter schwenken können als in der zweiten Betriebsposition. Hierdurch verringert sich der Querdurchmesser der Vorrichtung wiederum, wodurch sie aus der Bohrung 37 herausgezogen werden kann.

Bei der gezeigten Ausführungsform der erfindungsgemäßen Vorrichtung sind die Schwenkarme 32 in der dritten Betriebsposition näherungsweise antiparallel zu der ersten Betriebsposition ausgerichtet, wodurch sich die Vorrichtung leichter aus der Bohrung 27 herausziehen lässt. Es ist jedoch auch vorstellbar, dass die Schwenkarme 32 in der dritten Betriebsposition eine zu der ersten Betriebsposition identische Ausrichtung einnehmen.

Bei allen Ausführungsformen der Vorrichtung mit Stange 34 kann die Stange 34 mit den Schwenkarmen 32 verbunden sein, beispielsweise über einen Seilzug oder ein biegsames Blech. Außerdem können Markierungen oder Einrastungen an der Stange 34 vorgesehen sein, die eine für eine jeweilige Betriebsposition benötigte Verschiebung zwischen dem Außenrohr 33 und der Stange 34 anzeigen beziehungsweise in einer solchen einrasten können.

Obwohl die Erfindung im Detail durch Ausführungsbeispiele von bevorzugten Ausführungsformen näher illustriert und beschrieben wurde, ist die Erfindung nicht durch die offenbarten Beispiele eingeschränkt. Variationen der Erfindung können vom Fachmann aus den gezeigten Ausführungsbeispielen abgeleitet werden, ohne den Schutzumfang der Erfindung, wie er in den Ansprüchen definiert wird, zu verlassen.

## Patentansprüche

1. Eine Vorrichtung zum Fixieren eines Tellerfederpaketes (12, 13) einer Gasturbine, die Vorrichtung aufweisend einen stabförmigen Schaft mit einem Kopfbereich und einem Fußbereich und einer in dem Fußbereich des Schaftes angeordneten Betätigungsvorrichtung (34), wobei der Kopfbereich des Schaftes in einer ersten Betriebsposition einen ersten maximalen Durchmesser quer zu einer Längsachse des Schaftes und in einer zweiten Betriebsposition einen zweiten maximalen Durchmesser quer zu der Längsachse des Schaftes aufweist, wobei der zweite maximale Durchmesser größer als der erste maximale Durchmesser ist und wobei die Betätigungsvorrichtung (34) ausgebildet ist, durch einen Benutzer ausgelöst zu werden und bei Auslösung durch den Benutzer den Kopfbereich von der ersten Betriebsposition in die zweite Betriebsposition zu überführen.

2. Die Vorrichtung des vorhergehenden Anspruchs, bei der der Kopfbereich des Schaftes in einer dritten Betriebsposition einen dritten maximalen Durchmesser quer zu der Längsachse des Schaftes aufweist, der kleiner als der zweite maximale Durchmesser ist, wobei die Betätigungsvorrichtung (34) ausgebildet ist, den Kopfbereich von der zweiten Betriebsposition in die dritte Betriebsposition zu überführen.

3. Die Vorrichtung eines der vorhergehenden Ansprüche, mit wenigstens einem in dem Kopfbereich des Schaftes angeordneten Schwenkarm (32), wobei die Betätigungsvorrichtung (34) mit dem wenigstens einen Schwenkarm (32) verbunden oder verbindbar und dazu ausgebildet ist, den wenigstens einen Schwenkarm (32) zu schwenken, so dass in der ersten Betriebsposition das Vektorprodukt eines entlang der Längsachse des Schwenkarms ausgerichteten ersten Einheitsvektors mit einem entlang einer Längsachse des Schaftes ausgerichteten zweiten Einheitsvektor einen ersten Betrag und in der zweiten Betriebsposition das Vektorprodukt des ersten Einheitsvektors mit dem zweiten Einheitsvektor einen zweiten Betrag, welcher größer als der erste Betrag ist, besitzt.

4. Die Vorrichtung der beiden vorhergehenden Ansprüche, bei der ein dritter Betrag des Vektorproduktes des ersten Einheitsvektors mit dem zweiten Einheitsvektor in der dritten Betriebsposition kleiner als der zweite Betrag ist.

5. Die Vorrichtung eines der vorhergehenden Ansprüche, bei der in dem Kopfbereich des Schaftes zwei Schwenkarme (32) angeordnet sind, welche in der zweiten Betriebsposition auf einander gegenüberliegenden Seiten des Schaftes von dem Schaft abstehen.

6. Die Vorrichtung eines der vorhergehenden Ansprüche, bei der der Schaft ein Außenrohr (33) umfasst und die Betätigungsvorrichtung (34) als eine in dem Außenrohr angeordnete und entlang der Längsachse des Außenrohres (33) verschiebbare Stange (34) ausgebildet ist.

7. Die Vorrichtung der beiden vorhergehenden Ansprüche, bei der die zwei Schwenkarme (32) um jeweils ein an dem Außenrohr oder an der verschiebbaren Stange angeordnetes Scharnier (35) schwenkbar sind.

8. Ein Verfahren zum Austauschen einer Hitzeschildplatte (11) einer Gasturbine mit den folgenden Schritten:
- Zugänglichmachen einer Bohrung (27) in einer Gussschraube (10; 21, 22), welche durch die Hitzeschildplatte (11) in ein Tellerfederpaket (12, 13) eingeschraubt ist;
- Einstecken der Vorrichtung eines der vorhergehenden Ansprüche durch die Bohrung (27), wobei die Vorrichtung sich in der ersten Betriebsposition befindet;
- Überführen des Kopfbereichs des Schaftes der Vorrichtung von der ersten Betriebsposition in die zweite Betriebsposition durch Auslösen der Betätigungsvorrichtung (34);
- Fixieren des Tellerfederpaketes (12, 13);
- Entnehmen der Gussschraube (10; 21, 22);
- Austauschen der Hitzeschildplatte (11);
- Einschrauben der Gussschraube (21, 22) oder einer Austauschgussschraube (21, 22) durch die ausgetauschte Hitzeschildplatte (11) in das Tellerfederpaket (12, 13);
- Herausziehen der Vorrichtung; und
- Verschließen der Bohrung (27) in der Gussschraube (21, 22) oder der Austauschgussschraube (21, 22).

9. Das Verfahren des vorhergehenden Anspruchs, bei dem die Vorrichtung gemäß Anspruch 2 ausgebildet ist und vor dem Herausziehen der Vorrichtung in die dritte Betriebsposition überführt wird.

10. Eine Gussschraube (21, 22) zum Befestigen einer Hitzeschildplatte (11) einer Gasturbine, die Gussschraube (21, 22) aufweisend eine Sicherungsbuchse (21), welche auf einer Außenoberfläche ein erstes Außengewinde (24) und auf einer entlang einer Längsachse der Außenoberfläche durch die Sicherungsbuchse (21) hindurch verlaufenden Bohrung (27) ein Innengewinde (25) besitzt, und einen Gussschraubenkopf (22), welcher einen in das Innengewinde (25) einschraubbares zweites Außengewinde (26) aufweist und ausgebildet ist, die Bohrung (27) durch die Sicherungsbuchse (21) zu verschließen.

11. Verwenden einer Gussschraube (21, 22) gemäß dem vorhergehenden Anspruch zum Befestigen einer Hitzeschildplatte (11) einer Gasturbine.
